# EUROPEAN PATENT APPLICATION

(11) **EP 0 542 700 A1**
(43) Date of publication of application: **19.05.1993**
(21) Application number: 92830618.2
(22) Date of filing: 10.11.1992
(51) Int. Cl.: B23D 51/18, B27B 3/34, F01B 11/00

(54) **an apparatus for the alternating movement of flexible tools**

(30) Priority: 12.11.1991 IT BO910418
(71) Applicant: Bianconi, Devis, I-40020 Bubano - Mordano, Bologna (IT)
(72) Inventor: Bianconi, Devis, I-40020 Bubano - Mordano, Bologna (IT)
(74) Representative: Lanzoni, Luciano

(57) **Abstract**

An apparatus for the alternating movement of flexible tools, comprisng a couple of fluid-dynamic cylinders (2, 3) fed with a pressurised fluid and arranged specularly with their stems (4, 5) reciprocally facing each other and coaxial; the opposite ends of an alternatable tool (6) being fixable to the stems (4, 5) facing ends; the said fluid-dynamic cylinders (2, 3) being connected to a source of pressurised fluid (7) able to feed continuously the fluid-dynamic cylinders chambers (8, 9) close to the said tool (6), which tool (6) is thus placed in traction and made rigid, and also able to feed continuously and alternatingly another chamber (12, 13) of each fluid-dynamic cylinder (2, 3) in such a way that a direct thrusting force is continuously exerted on the the said tool (6), first in one direction and then in an opposite direction; rapid interconnecting means (66) being arranged at least between the chambers (8, 9) of the fluid-dynamic cylinders (2, 3) closer to the tool (6) to permit a rapid transfer of the pressurised fluid from one to the other of the said chambers (8, 9).

## Description

The invention relates to an apparatus for the alternating movement of flexible tools.

The prior art teaches numerous flexible tools which are axially moved during their use, such as, for example, blade saws.

In this case the tools are constrained a their opposite ends to the opposite ends of a bowed element moved alternatingly and parallel to the axis of the tool itself.

Among the problems that such a support and movement system creates is the difficulty of maintaining the tool continuously at a correct tension. Regulatable elements are used for this purpose, associated to the opposite ends of the bowed element, which regulatable elements impose a determined traction force on the tool.

Because of the conformation of the bowed element, it tends to bow even more at each operative run, either in one direction or the opposite direction, thus rendering ineffectual the initial tract of each said run.

The bowed element cannot however be made more rigid since it would weigh too much and would increase the masses in play, and would thus require a greater driving force of the entire apparatus. The dimension would be of the kind associated with the apparatus, perhaps more aptly termed machines considering their size, used to cut marble, which frequently reach sizes of about two metres.

The aim of the present invention is that of providing an apparatus or a device which permits of easily and economically moving the flexible tools during their operative run.

Another aim of the present invention is to provide an apparatus or device which is able to exploit all of the operative run of the tool, so as to increase its operative speed.

The invention, as it is characterised in the claims that follow, solves the above-defined problem by providing an apparatus for the alternating movement of flexible tools, characterised in that it comprises a couple of fluid-dynamic cylinders fed with a pressurised fluid and arranged specularly with their stems facing each other and coaxial: the opposite ends of an alternatable tool being fixable to the facing ends of the said stems; the said fluid-dynamic cylinders being connected to means able to feed continuously the chambers of the said fluid-dynamic cylinders close to the said tool, which tool is thus placed in traction and made rigid, and also able to feed continuously and alternatingly the other chamber of each fluid-dynamic cylinder in such a way that a direct thrusting force is continuously exerted on the the said tool first in one direction and then in the opposite direction; intercepting means being arranged between the said feeding means and the said chambers of the said fluid-dynamic cylinders which are the chambers further away from the said tool, and outlet means being connected to the said chambers and operating substantially in phase-opposition to the said intercepting means in such a way as to feed one of the said chambers with pressurised fluid and to unload the other chamber and vice-versa; rapid interconnecting means being arranged at least between the chambers of the fluid-dynamic cylinders close to the tool.

The advantages and characteristics of the present invention will better emerge from the detailed description that follows, made with reference to the accompanying drawings, which represent a preferred embodiment here illustrated in the form of a non-limiting example, and in which:
- Figure 1 shows, with some parts removed better to evidence others, a longitudinal section of the apparatus according to the present invention in an extreme configuration;
- Figure 2 shows, schematically, the whole apparatus according to the present invention, in a start-cycle operative configuration, and also shows the fluid-dynamic plant for actuation and movement; and
- Figures 3 to 5 show schematically three fundamental configurations of the apparatus according to the invention, which configurations are subsequent to that of figure 2.

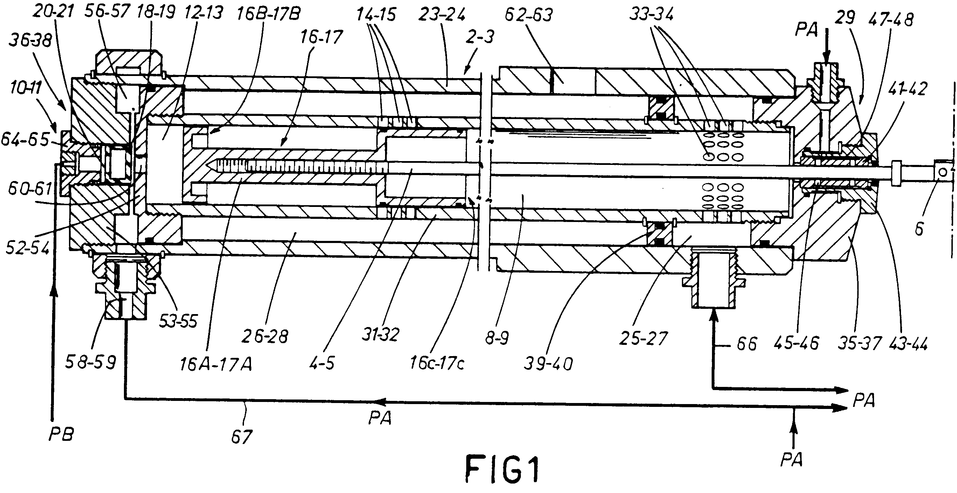

With reference to figure 1, the apparatus according to the invention is denoted in its entirety by 1 and is essentially constituted by a couple of identical fluid-dynamic cylinders 3, 3, arranged specularly with the respective stems,4, 5 reciprocally facing.

The opposite ends of the tool 6 to be moved are constrainable to the free ends of the stems 4, 5 that is the ends external to the respective fluid-dynamic cylinder 2, 3. Only the two ends of the tool 6 are schematically shown in the figure, since the tool 6 itself is not part of the present invention.

The fluid-dynamic cylinders 2, 3 are fed with a pressuriszed fluid, for example air, by feeding means 7 able to feed continuously the chambers of the fluid-dynamic cylinders 2, 3 close to the tool 6, so that the said tool 6 is constantly subjected to a traction force which is continuous and constant and renders it practically rigid and thus axially mobile not only in traction but also in thrust, and alternatively the furthest chamber from the tool first belonging to one then to the other fluid-dynamic cylinders 2, 3 which are an essential part of the apparatus; all the preceding occurring without a break in continuity. Intercepting means 10, 11 and outlet means 14, 15 cooperate with the feeding means 7, and permit a correct alternating of the pressures inside the external chambers, that is the chambers furthest from the tool 6, of the fluid-dynamic cylinders 2, 3 in such a way that the tool 6 is subjected to a continuous traction force, by effect of the constant pressure inside the internal chambers of the fluid-dynamic cylinders 2, 3 and by effect of a continuous but alternatingly-directed thrust which impresses on the said fluid-dynamic cylinders 2, 3 an alternative movement by effect of the variable pressure internally to the external chambers of the fluid-dynamic cylinders 2, 3.

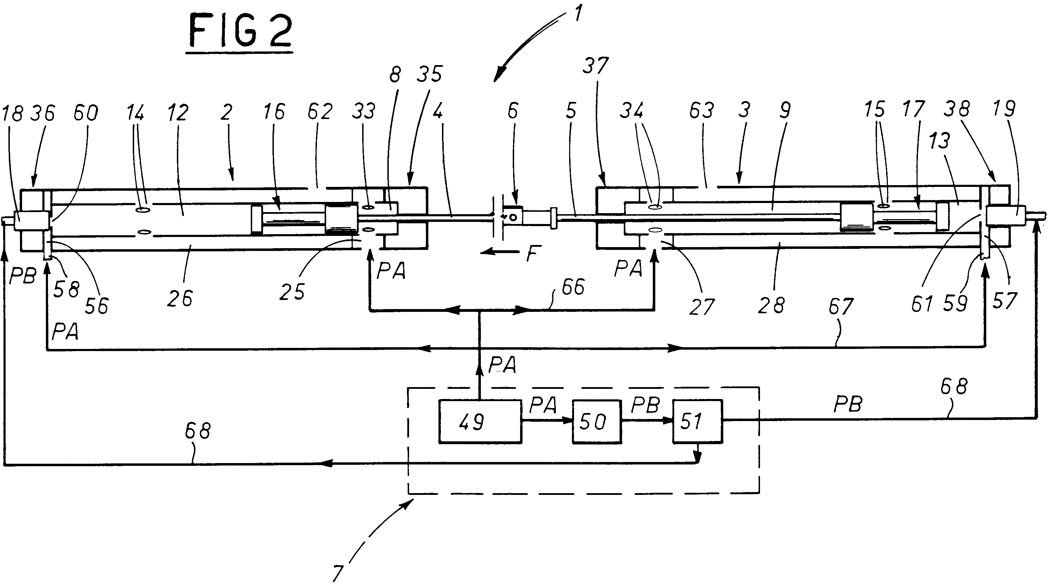

The structure of the fluid dynamic cylinders 2, 3 is illustrated in detail in figure 1 where only the left fluid-dynamic cylinder is illustrated, denoted in figure 2 by 2, since they are perfectly identical and arranged specularly with their stems 4, 5 reciprocally facing. In figure 1 most of the elements are double-numbered since the number on the left of the hyphen refers to the fluid-dynamic cylinder 2,
illustrated while the number on the right of the said hyphen refers to the right fluid-dynamic cylinder 3 which is not illustrated: figures 1 and 2 can if necessary be compared.

The fluid-dynamic cylinder 2, which will be used also as reference to the other cylinder, is composed of a cylindrical jacket 31 internally housing a sealedly slidable piston 16. The piston 16, which divides the internal volume of the cylindrical jacket 31 into two chambers 8 and 12, is fixed to one end of the stem 4 and is constituted by a single central body 16A constrained to the stem 4 and by two bell-shaped bodies 16B, 16C arranged on opposite bands of the body 16A. The bell-shaped bodies 16B, 16C, have a greater diameter than that of the body 16A, slide sealedly inside the cylindrical jacket 31 and are identically turned with their concavity towards the stem 4. The bell-shaped body 16C is fixed on the stem 4 and is longer, measured along the axial direction of the fluid-dynamic cylinder 2, than the other bell-shaped body 16B, and the piston 16 is quite long for reasons which will become evident hereinafter. The described and illustrated structure of the piston 16 is not fundamental and is used only to reduce the mass of the selfsame piston 16 without varying its length, which remains equal to the length of the whole body 16A and the bell-shaped bodies 16B, 16C.

The cylindrical jacket 31 exhibits, in proximity to its stem 4 end, a plurality of radial inlet holes 33 and, at a distance from its other end not greater than the length of the piston 16, a second plurality of radial outlet holes 14.

The opposite ends of the cylindrical jacket 31 are closed by two heads 35, 36, which also close an axially hollow cylindrical body 23, coaxial to the cylindrical jacket 31, arranged internally to the said cylindrical jacket 31 and together with it defines a hollow space sealedly subdivided by a baffle 39 into two coaxial chambers 25, 26. The chamber 25 communicates, through the radial inlet holes 33, with the chamber 8, while the chamber 26 communicates, through the radial outlet holes 14, with the chamber 12. The first of the coaxial chambers 25, 26, also communicates with the feeding means 7 and the second with the outside atmosphere through a radial hole 62 in the cylindrical body 23.

Non-contact support means 29 are constrained to the head 35, which support means 29 are constituted by a bush 41 made of material having a low friction coefficient housed in a respective seating bored into the head 35 and stopped by a plug 43. The bush 41 is freely chucked on the stem 4 and exhibits two pluralities of radial inlet holes 45 distanced along the said stem 4 and externally communicating with an annular chamber 47 made in the bush 41 and, in its turn, in communication with the feeding means 7.

The said feeding means 7 comprise, as illustrated in figure 2, a pressurised fluid generator 49, for example a compressor, a pressure-reducer 50 fed by the pressurised fluid generator 49, and a distributor 51 fed by the pressure-reducer 50. The feeding means 7 are thus able to feed the respective fluid, for example air, to which reference will be made hereinafter, both at pressure PA, at the outlet of the compressor 49, and at a reduced pressure PB, at the outlet of the distributor 51 for the reason that will now become clear with particular reference to the head 36. The head 36 (see figure 1) is made in two parts 52, 53 defining together with the cylindrical body 23, internally to which they are arranged, a hollow space 56 communicating with the compressor 49, possibly through a neck 58. In part 53, which is more external to the cylindrical body 23, a chamber 20 coaxial to the stem 4 and acting as a seating for a small piston 18 held in by a plug 64 constrained to the selfsame part 53. The chamber 20 communicates radially with the hollow space 56 and axially, on one side with the chamber 12 and on the other side with the distributor 51. The piston 18 is sealedly axially mobile inside the chamber 20 between a retracted position, defined by the plug 64 and in which the hollow space 56 can communicate with the chamber 12, and a forward position in which the said communication is prevented. In reality, the part 52 constitutes a diaphragm, as it will be termed hereinafter, between the chamber 12 and the hollow space 56 and exhibits an axial hole 60 which which places the hollow space 56 in communication with the chamber 12. The axial hole 60 has a diameter which is smaller than the diameter of the piston 18 such that the said piston 18, pushed by the pressure existing in the chamber 20 strikes against the diaphragm 52 and obstructs the axial hole 60. As will be more clearly seen hereinafter, the pistons 18, 19 constitute the intercepting means 10, 11.

Looking now at figure 2, in which the fluid-dynamic circuit activating the apparatus 1 is illustrated, it can be noted that the chambers 25, 27, intercommunicate through an external conduit 66 fed at pressure PA by the compressor 49. The conformation and the through-sections of the external conduit 66, of its accessory organs (not illustrated) and of the radial inlet holes 33, 34, are such as to allow only minimal load losses and thus maximum velocity to the air which, as will be seen hereinafter, flows from the chamber 8 to the chamber 9 and viceversa. The hollow spaces 56, 57, are instead reciprocally in communication, through the necks 58, 59, through a second external conduit 67 communicating with the compressor 49 with which the annular chambers 47, 48 also communicate, not illustrated in figures from 2 to 5 since they do not directly intervene in the functioning of the apparatus 1. The annular chambers 47, 48 generate two air cushions around the stems 4, 5 to reduce to a minimum the reactions of the said stems 4 and 5, with the aim of making and keeping the tool 6 "rigid". The chambers 20, 21 are connected, by means of conduits 68 to the distributor 51, which distributor 51 feeds compressed air at pressure PB lower than the erogation pressure PA of the compressor 49.

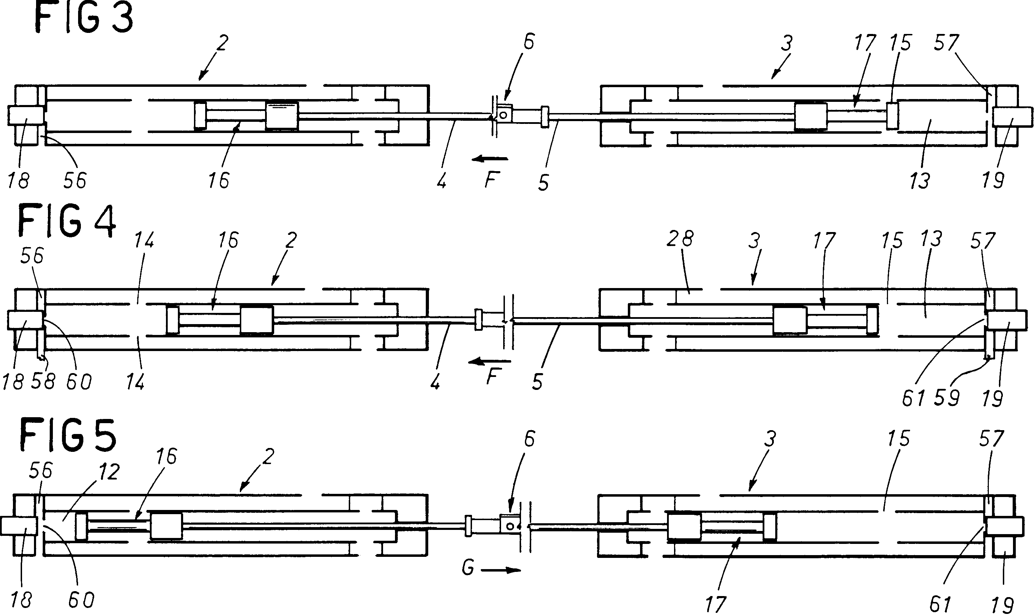

With reference to figures 2 to 5, the functioning of the apparatus 1 according to the present invention is the following. Firstly, the apparatus 1 is seen in a start-cycle configuration (figure 2) in which the pistons 16, 17, have reached their extreme point. Observing figure 2, it can be seen that the piston 16 is close to the head 35 but it is not obstructing the radial inlet holes 33, while the piston 17 is close to the head 38 and obstructs the outlets holes 15: this means that the inlet holes 33, 34 are not obstructed by the pistons 16, 17 when the latter arrive at their end-run, a condition which must always be satisfied. At the same time the piston 18 obstructs the axial hole 60 and the piston 19 leaves the axial hole 61 unobstructed. In this configuration, in chamber 8 and 9 a pressure PA is maintained, while in hollow spaces 56 and 57 there is a pressure which is about equal to PA, in the chamber 12 pressure is atmospheric since the said chamber 12 communicates with the chamber 26 which in turn communicates with the atmosphere and in chamber 13 there is a pressure of less than PA. It follows that the tool 6 is subjected to a traction force exerted by the pistons 16, 17 and by the stems 4 and 5, which intensity is greater in relation to the erogation pressure of the compressor 49. The tool 6 behaves thus as a rigid element which can be subjected to an axial thrust force without flexing: this is favoured by the presence of non-contact support means 29, 30 which reduce the reaction friction on the stems 4 and 5, as has already been mentioned. Thus, on the entirety of the piston elements 16, 17, stems 4 and 5 and tools 6 a direct force acts according to the direction of arrow F of figure 2 and which force intensity, ignoring the negligible reaction offered by the pressure PA present in the chamber 12, depends on the pressure PA present in the chamber 13 added to the air flow which enters into the chamber 13 through the neck 59 and which depends on the weight of the said entirety of elements. The force wich "pushes" the piston 17, on its advancement in direction F, is gradually reduced up to a value depending on the flow of air which enters through the neck 59 and on the weight of the said entirety of elements, since the pressure present in the chamber 13 gradually drops. The piston 17 thus arrives at the configuration of figure 3, in which it is about to begin to feed the outlet holes 15, at a speed which is intermediate between the initial speed and the speed due only to the thrust depending on the air flow that enters through the neck 59 and on the weight of the said entirety of elements. The entirety of elements consisting of the pistons 16, 17, the stems 4 and 5 and the tool 6 accumulates, during this first part of its operative run, a kinetic energy that permits it to advance also when the piston 17 completely frees the outlet holes 15, suddenly reducing the pressure inside the chamber 13, since the said chamber 13 enters into communication with the chamber 28 which last is already at atmospheric pressure, through the radial hole 63, with a consequent advancement of the piston 19 and closing of the axial hole 61 through the thrust exerted by the pressure PB present inside the chamber 21. The kinetic energy accumulated by the entirety of elements comprising the pistons 16, 17, the stems 4, 5 and the tool 6 is sufficient to bring the piston 16 into a position where it obstructs the radial outlet holes 14, and to compress the air present inside the chamber 12 first up to a value at least superior to the pressure PB of the chamber 20, so as to cause the retracting of the piston 18 and the placing of the hollow space 56 in communication with the chamber 12, then up to a value which is near to or superior to PA. The pressure value reached inside the chamber 12 at the moment of the piston 16 stop depends on the pressure difference between the hollow space 56 and the chamber 12 in the moment when the piston 18 frees the axial hole 60 and the kinetic energy which the entirety of elements consisting of the pistons 16, 17, the stems 4, 5 and the tool 6 still has. As soon as the piston 16 stops, the chamber 12, inside which a pressure has been generated which is near to or superior to PA, acts as an internal combustion chamber and thrusts the piston 16 according to the direction G of figure 5, that is according to the opposite direction to F, so as to impart to the tool 6 a return-run with respect to that of figures from 2 to 4. At the same time, starting from the moment illustrated in figure 4 in which the piston 19 has obstructed the axial hole 61, the hollow space 57 continues to be fed with air at pressure PA through the neck 59: this means that the pressure internally to the hollow space 57 grows with a certain gradualness, depending on the minimum passage section of the neck 59, up to a value at least near to PA.

It is thus evident that the apparatus 1 confers on the tool 6 a straight alternating movement whose maximum velocity, in absolute values, and whose maximum work force depends substantially on the value of the PA pressure. It should be noted that increasing the PA axial thrust pressure of the tool 6 means also to increase the traction thrust value which acts on the tool 6 in order to tense it rigidly. Indeed, in order to be able to exert a greater axial thrust on the tool 6 it is necessary to render the said tool 6 more rigid so as to be able to sustain, without bending, the said thrust and reaction of the body it is working on. It is now evident why the air must be able to flow at the greatest velocity possible and with the smallest load losses possible between the chamber 8, 9: the air moves between these chambers 8 and 9 during the movements in the two directions of the pistons 16 and 17 and the less it is obstructed in its movements, the more the tool 6 behaves like a rigid body.

In order to obtain good functioning of the apparatus 1 and in order that high operative speeds can be reached, it is important that also the other connections have limited load losses, including the radial outlet holes 14, 15 which, differently, would cause the pistons 16, 17 to compress the air present in the respective chambers 12 and 13 with a consequent reaction on the pistons 16, 17 themselves, instead of making the air exit rapidly form the said chambers 12 and 13.

Of particular importance are the dimensions of the passage section of the necks 58, 59: an excessively high value of the said passage section of the necks 58, 59, would lead to a greater accumulation of kinetic energy on the part of the entirety of the piston elements 16 and 17, the stems 4, 5 and the tool 6 during the phase in which only the air flow fed through the said necks 58, 59 is acting on them. This greater accumulation of kinetic energy might however not be balanced by a possible increase in the pressure in the chambers 12, 13, effected by the pistons 16, 17, from the moment in which the pistons 18, 19 free the axial holes 60, 61 and the pistons 16, 17 can strike more or less violently against the diaphragms 52, 54. These impacts, apart from damaging the apparatus 1, also reduce the operative speed of the said apparatus 1 since they eliminate the thrust which at the beginning of each run places the entirety of piston elements 16, 17, stems 4 and 5 and tool 6 in movement and which depends on the pressure existing in the chamber 12 or respectively in the chamber 13. The passage section of the necks 58, 59 being equal it is thus necessary to reduce at least the value of the PA pressure and, consequently, the operative speed of the apparatus 1. Depending on the material of the body on which the tool 6 must work, and on the length of the operative run, an intervention will be made on the dimensions of the passage section of the necks 58, 59 and on the PA pressure in order to avoid impacts of the pistons 16, 17 against the diaphragms 52 and 54 and, the dimensions of the passage sections of the necks 58, 59 being equal, the pressure PA value will be increased to increase the operative speed of the apparatus 1. In this way the air present in the chambers 12, 13 will behave as an elastic body which, at first gives in order gradually to reduce the velocity of the entirety of piston elements 16, 17, stems 4, 5 and tool 6, absorbing from it the kinematic energy and, successively, the said air expands in order to place the entirety of elements in motion, giving to the said elements the energy previously absorbed.

When the apparatus 1 is deactivated it is necessary, in order to be able to reactivate it, to bring one of the pistons 16 or 17 in proximity to or against the respective diaphragm 52 or 54 and to pressurise the chambers 8 or 9 in order to place the tool 6 in traction, then to feed the remaining parts of the circuit. The movement of one of the pistons 16 or 17 can be performed manually or by acting manually or automatically on organs which are part of the fluid-dynamic circuit of the apparatus 1 itself and not illustrated such as other intercepting organs. The movement of one of the pistons 16 or 17 and the pressurising of chambers 8 and 9 can be realised either in the above described order or in the inverse order, since the remaining phase, of feeding of the remaining parts of the fluid dynamic circuit is performed at the end and after the chambers 12 and 13 have been brought to PA work pressure. In this way, even if the piston 18 and 19 towards which the relative piston 16 or 17 has been brought obstructs its axial hole 60 or 61, the pressure increases much more quickly in the hollow space 56 or 57 in the chamber 20, 21 and can make the piston 18 or 19 retract and pressurise the chamber 12 or 13. It should be noted that at the same time the other chamber 13 or 12 is in communication with the atmosphere and the air which penetrates inside it is unloaded directly through the outlet hole 15 or 14 up until the piston 19 or 18 closes its axial hole 61 or60 pushed by the PB pressure reached inside the chamber 21 or 20. The final configuration assumed by the apparatus 1 is the one illustrated in figure 2 or in figure 6 with a repetition of the already-described phases.

If in the least advantageous position for starting, that is the position in which the pistons 16, 17 are more or less equidistant from the respective diaphragms 52, 54, it is sufficient that at least one of the two pistons 16 or 17 covers at least a part of the respective unloading means 14 or 15 so that there can be a spontaneous start without any starting intervention as described above. In this case, in the chamber 12 or 13 which outlet holes 14 or 15 are most obstructed, the drop in pressure through the outlet holes 14 or 15 is slower than th increase of pressure due to the feeding of air through the axial hole 60 or 61 with the reaching of he conditions shown in figures 2 or 5. This eventuality can happen especially when the operative run of the tool 6 is slightly less than double the length of each piston 16 or 17.

The apparatus 1 thus reaches all of the predetermined aims, and in particular is able to use each run of the tool 6 simply and economically.

A considerable advantage of the present invention is the possibility it offers of making the tool 6 do operative runs of considerable entity without increasing excessively the masses in play, as usually happens at present. Another advantage of the present invention is its working economy since it functions with compressed air, which is a very economical fluid as well as being easily compressible so that it can be termed an excellent elastic element.

The present invention is thus very simple to use, does not need particular special attention and is light and can be used with several types of flexible tools.

## Claims

1. An apparatus for the alternating movement of flexible tools, characterised in that it comprises a couple of fluid-dynamic cylinders 2, 3) fed with a pressurised fluid and arranged specularly with their stems (4, 5) facing each other and coaxial: the opposite ends of an alternatable tool (6) being fixable to the stems (4, 5) facing ends; the said fluid-dynamic cylinders (2, 3) being connected to means (7) able to feed continuously the fluid-dynamic cylinders chambers (8, 9) close to the said tool (6), which tool (6) is thus placed in traction and made rigid, and also able to feed continuously and alternatingly another chamber (12, 13) of each fluid-dynamic cylinder (2, 3) in such a way that a direct thrusting force is continuously exerted on the the said tool (6), first in one direction and then in an opposite direction; intercepting means (10, 11) being arranged between the said feeding means (7) and the said chambers (12, 13) of the said fluid-dynamic cylinders (2, 3) which are the chambers further away from the said tool (6), and outlet means ( 14, 15) being connected to the said chambers (12, 13) and operating substantially in phase-opposition to the said intercepting means (10, 11) in such a way as to feed one of the said chambers (12 or 13) with pressurised fluid and to unload the other of the said chambers (13 or 12) and vice-versa; rapid interconnecting means (66) being arranged at least between the chambers (8, 9) of the fluid-dynamic cylinders (2, 3) closer to the tool (6).

2. An apparatus as in claim 1, characterised in that the said intercepting means (10, 11) and the said outlet means (14, 15) are connected directly to pistons (16, 17) inside the the fluid-dynamic cylinders (2, 3).

3. An apparatus as in claim 1, characterised in that each fluid-dynamic cylinder (2, 3) is equipped with support means (29, 30) of the stem (4 or 5) inside it, which support means (29, 30) are able to sustain the said stem (4, 5) without coming into contact with it, in order to limit friction.

4. An apparatus as in claim 3, characterised in that the said non-contacting support means (29, 30) are able to generate an air cushion enveloping the stem (4, 5) of the respective fluid-dynamic cylinder (2, 3).

5. An apparatus as in claim 2, characterised in that the said outlet means (14, 15) are constituted by radial holes in the chambers (12, 13) of the said fluid-dynamic cylinders (2, 3) distanced from the said tool (6), and are made at a distance from the said fluid-dynamic cylinders (2, 3) ends distanced from the said tool (6) no more than the length of the pistons (16, 17) of the said fluid-dynamic cylinders (2, 3) measured along the said cylinders (2, 3) movement direction; the said outlet means (14, 15) becoming automatically obstructed or freed by the relative pistons (16, 17) in movement.

6. An apparatus as in claim 1, characterised in that the said intercepting means (10, 11) are constituted by a piston (18, 19) freely axially housed in a respective chamber (20, 21) radially communicating with the said feeding means (7) and axially, on one side with the respective chamber (12, 13) of the fluid-dynamic cylinders (2, 3) which is most distanced from the tool (6) and, on the other side, with a source (22) of a pressurised fluid at a lower pressure than that of the feeding fluid pressure of the said fluid-dynamic cylinders (2, 3); the said pistons (18, 19) being axially sealedly mobile between a retracted position, in which communication between the said feeding means (7) and the respective cylinder chamber (12, 13) furthest from the tool (6) is permitted, and an advanced position, in which the said communication is prevented; elastic means being interposed between each piston (16, 17) and the respective piston (18, 19) to contrast the pressure present in the chamber (20, 21) housing the said piston (18, 19) up until the said pressure is defeated when the said elastic means are compressed to more than a determined limit value by the relative piston (16, 17).

7. An apparatus as in claim 2, characterised in that the said outlet means (14 and 15) are constituted by radial holes in the chambers (12, 13) of the said fluid-dynamic cylinders (2, 3) distanced from the said tool (6) and the said radial holes are realised at a distance from the ends of the said fluid-dynamic cylinders (2, 3) distanced from the tool (6) at a distance which is not greater than the length of the pistons (16, 17) of the said fluid-dynamic cylinders (2, 3) measured along their movement direction; the said outlet means (14, 15) being automatically obstructed or freed by the relative piston (16, 17) in movement; the said intercepting means (10, 11) being constituted by a piston (18, 19) housed axially freely inside a respective chamber (20, 21) communicating radially with the said feeding means (7) and axially, on one side, with the respective chamber (12, 13) of the fluid-dynamic cylinders (2, 3) distanced from the tool (6) and on the other side, with a source (22) of a pressurised fluid at a pressure which is lower than that of the feeding pressure of the said fluid-dynamic cylinders (2, 3); the said pistons (18, 19) being axially sealedly mobile between a retracted position, in which communication between the said feeding means (7) and the respective chamber (12, 13) of the fluid dynamic cylinders is permitted, and an advanced position, in which such communication is prevented; the fluid contained inside the chambers (12, 13) of the said fluid-dynamic cylinders (2, 3) distanced from the said tool (6) after the said outlet means (14, 15) have been obstructed by the said pistons (16, 17) constituting the elastic means interposed between each piston (16, 17) and the respective piston (18, 19) and aimed at contrasting the pressure present in the chamber (20, 21) housing the said piston (18, 19) up until the said elastic means are defeated, when they are compressed beyond a determined limit value by the relative piston (16, 17).

8. An apparatus as in claim 5, characterised in that each fluid-dynamic cylinder (2, 3) is a pneumatic cylinder and is sealedly closed inside a respective cylindrical body (23, 24) which body is axially hollow and coaxial to the said pneumatic cylinder, and which defines together with the said pneumatic cylinder (2, 3) a hollow space subdivided by a baffle (39, 40) into two coaxial chambers (25, 26, 27, 28) each communicating with one of the chambers (8, 9, 12, 13) of the fluid-dynamic cylinders (2, 3), one said chamber (25, 27) for each fluid-dynamic cylinder (2, 3) communicating with the chamber (8, 9) nearer to the tool (6) and with the said feeding means (7) and the other said chamber (26, 28) communicating with the chamber (12, 13) distanced from the tool (6) and with the atmosphere.
